# EUROPEAN PATENT APPLICATION

(11) **EP 1 655 408 A1**
(43) Date of publication of application: **10.05.2006**
(21) Application number: 05105315.5
(22) Date of filing: 16.06.2005
(51) Int. Cl.: D06F 39/04, D06F 39/08, F22B 1/28

(54) **Washing machine**

(30) Priority: 05.11.2004 KR 2004090036; 05.11.2004 KR 2004090037; 18.11.2004 KR 2004094772
(71) Applicant: SAMSUNG ELECTRONICS CO., LTD., Suwon-si, Gyeonggi-do (KR)
(72) Inventor: Park, Seon Woo, Yeongtong-Gu, Suwon-Si Gyeonggi-Do (KR); Kim, Hyung Gyoon, Yeongtong-Gu, Suwon-Si Gyeonggi-Do (KR); Pyo, Sang Yeon, Yeongtong-Gu, Suwon-Si Gyeonggi-Do (KR); Kim, Hyun Sook, Yeongtong-Gu, Suwon-Si Gyeonggi-Do (KR); Park, Jee Hun, Paldal-Gu, Suwon-Si Gyeonggi-Do (KR); Oak, Seong Min, Hoewon-Gu, Masan-Si Gyeongsangnam-Do (KR)
(74) Representative: Grey, Ian Michael

(57) **Abstract**

A device to generate steam in a washing machine comprising a main body (31) and means of heating the main body (31), a flow channel (32) is defined in the main body (31) such that water flowing through the flow channel (32) is heated and converted to steam.

## Description

The present invention relates to a device for generating steam in a washing machine to assist in cleaning laundry, the device comprising a main body and a heater for heating the main body.

A washing machine is disclosed in Korean Patent Laid-open Publication No. 10-2004-85507 (dated October 8, 2004) comprising a steam jet wherein steam is discharged to the inside of a washing machine tub to improve the washing action.

The above mentioned document discloses a steam generating device for a washing machine which comprises a pressure container with an inlet to supply water and an outlet to discharge steam, a heater installed in the pressure container to heat water supplied to the pressure container, an inlet valve to adjust the supply of water to the pressure container, and an outlet valve to adjust the discharge of steam from the pressure container. The steam generating device further comprises a water level sensor which senses the quantity of water supplied to the pressure container, a temperature sensor to control the operation of the heater according to the temperature in the pressure container, a pressure sensor to sense the pressure in the pressure container, and an automatic temperature switch to cut off the supply of power to the heater if the temperature in the pressure container increases to an excessive level.

As the steam generating device only generates steam when the pressure container is filled with water, there is a delay in the supply of steam due to the time required to heat the water in the pressure container. Disadvantages of this steam generating device are a high energy consumption and an increased overall washing time.

Furthermore, the above steam generating device has high production costs as it comprises the pressure container, the water level sensor and the pressure sensor. Moreover, if there is an excessive pressure level increase in the pressure container due to a malfunction of the sensors, the pressure container will crack and high temperature steam will leak through cracks in the pressure container.

The present invention seeks to provide a steam generating device for a washing machine which overcomes or substantially alleviates the problems discussed above.

A device to generate steam in a washing machine according to the present invention is characterised by a flow channel in the main body to convert water flowing in the flow channel into steam as it flows therethrough.

Embodiments of the present invention will now be described, by way of example only, with reference to the accompanying drawings, in which:
Figure 1 is a sectional view of a washing machine in accordance with the present invention;
Figure 2 is a perspective view of one embodiment of a steam generating device for the washing machine;
Figure 3 is a sectional view of the steam generating device shown in Figure 2;
Figure 4 is a sectional view of a second embodiment of a steam generating device;
Figure 5 is a circuit diagram illustrating the connection of an automatic temperature switch and a fuse of the steam generating device; and
Figure 6 is a sectional view of a non-cohesive coating layer formed on the inner surface of a steam generation channel of the steam generating device.

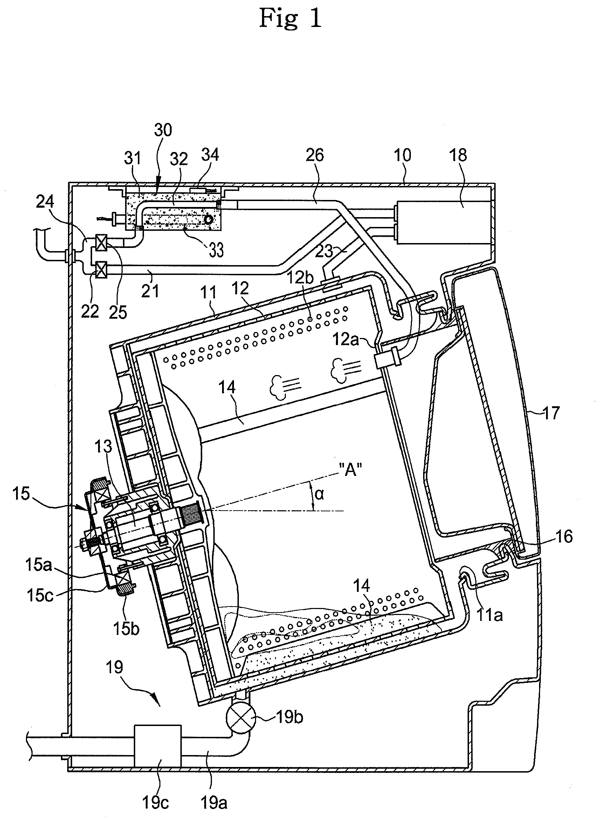

Referring to the drawings, there is shown in Figure 1 a washing machine comprising a tub 11 to contain water installed in a main body 10 and a rotary drum 12 rotatably installed in the tub 11.

The tub 11 is aligned in the washing machine at designated angle (α) to the base of the machine such that a front surface of the tub 11, through which an opening 11a is formed, is located higher than that of a rear surface of the tub 11. The rotary drum 12 is installed in the tub 11 at the same designated angle (α) as the tub such that a front surface of the rotary drum 12, through which an opening 12a is formed is at an angle. A rotary shaft 13 is connected to the central portion of the rear surface of the rotary drum 12 such that the rotary drum 12 is rotatable in the tub and is rotatably supported by the central portion of the rear surface of the tub 11.

A plurality of through-holes 12b are formed through the cylindrical surface of the rotary drum 12 so that water can circulate therethrough and a plurality of lifters 14 are installed on the inner surface of the rotary drum 12 to lift and drop laundry when the rotary drum 12 is rotated.

A motor 15 is installed on the rear surface of the tub 11 to rotate the rotary shaft 13 connected to the rotary drum 12. The motor 15 includes a stator 15a fixed to the rear surface of the tub 11, a rotor 15b rotatably disposed outside the stator 15a, and a rotary plate 15c connecting the rotor 15b and the rotary shaft 13.

An opening 16 corresponding to the opening 12a of the rotary drum 12 and the opening 11a of the tub 11 is formed through the front surface of the main body 10 so that laundry can be inserted into or taken out of the rotary drum 12 and a door 17 is installed in the opening 16.

A detergent supply device 18 and a steam generating device 30 are installed above the tub 11 to supply detergent and steam to the tub respectively and a drainage device 19 including a drainage pipe 19a, a drainage valve 19b and a drainage pump 19c for discharging water in the tub 11 is installed below the tub 11.

The detergent supply device 18 is positioned to be accessible from the front surface of the main body 10 so that a user can easily place the detergent inside the detergent supply device 18. A first water supply pipe 21 is branched from an external water supply and is connected to the detergent supply device 18, and a first water supply control valve 22 to control the supply of water to the detergent supply device 18 is installed in the first water supply pipe 21. A connection pipe 23 is installed between the detergent supply device 18 and the tub 11 so that the water, after passing through the detergent supply device 18, is supplied to the tub 11. The above structure causes the supplied water to pass through the detergent supply device 18 to the tub 11, thereby causing detergent in the detergent supply device 18 to dissolve and to be supplied to the tub 11.

A second water supply pipe 24 is branched from the external water supply source and is connected to the steam generating device 30, and a second water supply control valve 25 to control the supply of water to the steam generating device 30 is installed in the second water supply pipe 24. Furthermore, a steam supply pipe 26 is connected to the steam generating device 30 to guide steam from the steam generating device 30 to the inside of the tub 11.

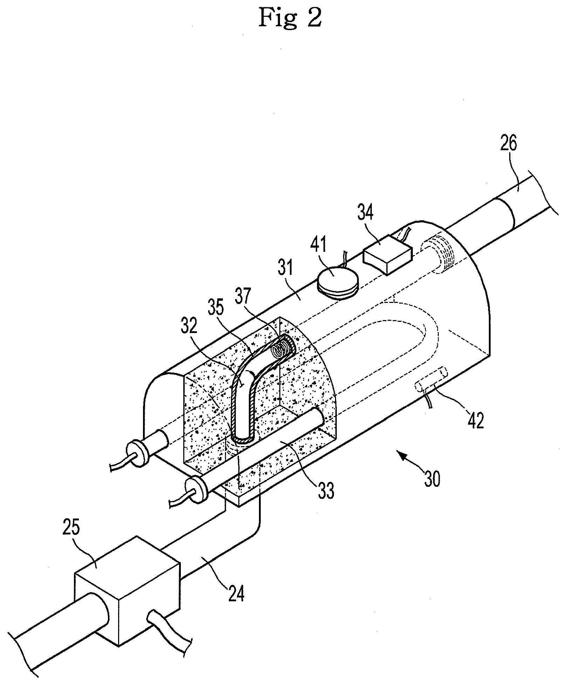

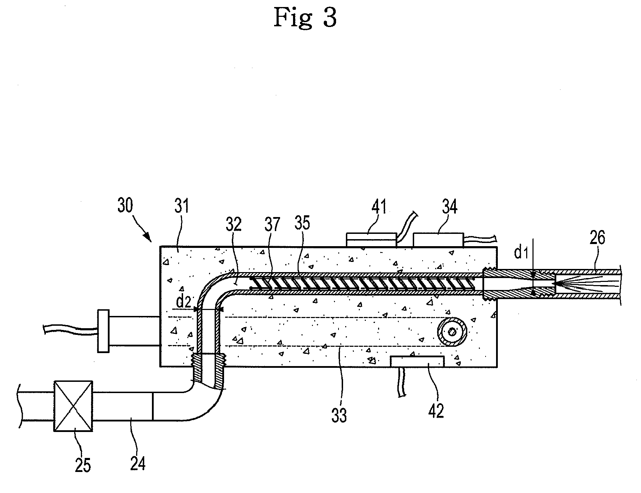

As shown in Figures 2 and 3, this embodiment of the steam generating device 30 includes a main body 31 made of a metal molded by aluminum die-casting, a steam supply channel 32 installed in the main body 31 including an inlet connected to the second water supply pipe 24 and an outlet connected to the steam supply pipe 26, a heater 33 buried in the main body 31 to heat water passed through the steam supply channel 32 to generate steam, and a temperature sensor 34 installed on the outer surface of the main body 31 to sense the temperature of the main body 31 in order to control the heater 33.

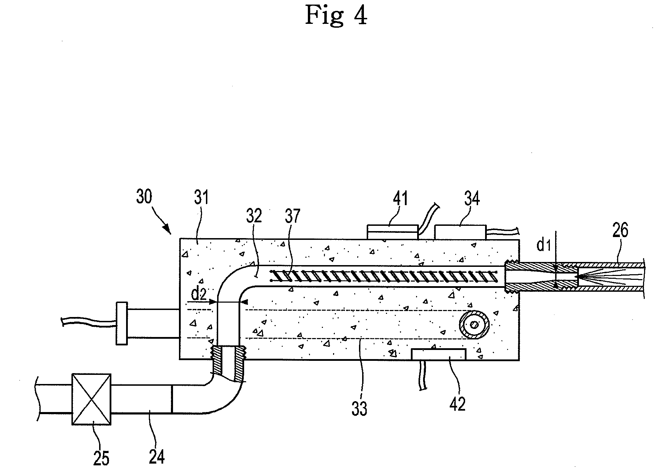

The main body 31 of the steam generating device 30 is manufactured such that a pipe 35 which forms the steam supply channel 32 and the heater 33 are buried in the main body 31 during the molding of the main body 31 by aluminum die-casting as shown in Figures 2 and 3, or a core (not shown) for forming the steam supply channel 32 and the heater 33 are buried in the main body 31 as shown in Figure 4. In Figure 4, the steam supply channel 32 is formed in the main body 31 by eliminating the core after the molding of the main body 31 is completed.

In the above configuration, in which the main body 31 of the steam generating device 30 is made of a metal with excellent thermal transfer properties and the heater 33 is buried in the main body 31, water in the steam supply channel 32 is heated and changed to steam when the main body 31 is heated to a high temperature by the heater 33 and water flows along the steam supply channel 32. That is, since a small quantity of water is supplied to the steam supply channel 32 when the main body 31 is heated to the high temperature, the water is heated when the water passes through the steam supply channel 32, thus being changed to high temperature steam. As shown in Figure 2, in order to achieve the above process, the main body 31 preferably has a rod shape with a designated length wherein the steam supply channel 32 is formed in a longitudinal direction in the main body 31, and the heater 33 is also extended in a longitudinal direction in the main body 31 but is separated from the steam supply channel 32. In this embodiment, as shown in Figure 2, a U-shaped heater is used.

Referring to Figure 3, an outlet of the steam supply channel 32 of the steam generating device 30 is open at all times and is connected to the steam supply pipe 26. The inner diameter (d1) of the steam supply channel 32 outlet is smaller than the inner diameter (d2) of the steam supply channel 32 inlet such that this diametrical difference generates channel resistance at the steam supply channel outlet and so steam is retained in the steam supply channel 32 for a longer period thereby facilitating the generation of high temperature steam. As the outlet of the steam supply channel 32 is permanently open an excessive increase of pressure in the steam supply channel 32 is prevented thus facilitating the stable use of the steam generating device 30. Figures 3 and 4 show a spiral coil member 37 installed in the steam supply channel 32 which restricts the flow of water in the steam supply channel 32 to facilitate the generation of steam.

The supply of water is controlled by the opening and closing of the second water supply control valve 25 or by opening the steam supply channel 32 by a small degree such that a small quantity of water flows in the steam generating device 30, so that the water is heated to a steam state when the water passes through the steam supply channel 32. For this reason, the second water supply control valve 25 employs an electric valve which is electrically opened and closed, or a flow control valve which controls the flow rate of fluid.

Although not shown in the drawings, a control unit controls the operation of the heater 33 and the second water supply control valve 25. The control unit controls the state (i.e., opened/closed state) or the degree of opening of the second water supply control valve 25 using a predetermined program, thereby controlling the supply of water to the steam generating device 30. Alternatively, the control unit can control the state or the degree of opening of the second water supply control valve 25 dependent on data sensed by the temperature sensor 34 installed in the main body 31 of the steam generating device 30. The supply of water dependent on the data supplied by the temperature sensor 34 is performed such that the supply of water is decreased or stopped when the temperature of the main body 31 is lowered below a predetermined level and is increased when the temperature of the main body 31 is raised above a predetermined level. When the steam generating device 30 is applied to the washing machine as in the present invention, the above control unit is installed integrally with the control unit controlling the overall operation of the washing machine, and when the steam generating device 30 is used separately from the washing machine, the above control unit is separately installed to control only the operation of the steam generating device 30.

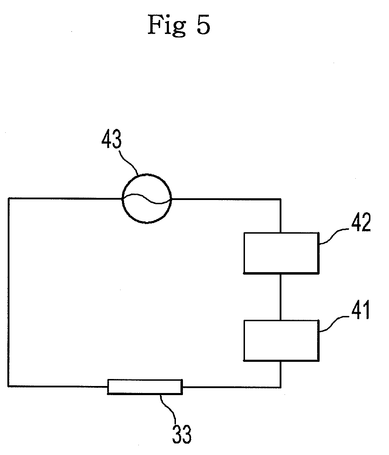

The steam generating device 30 further includes an automatic temperature switch 41 and a fuse 42, installed on the outer surface of the main body 31 which serves as preliminary overheating prevention devices to control power supplied to the heater 33 in order to prevent the heater 33 overheating when the supply of water to the steam generating device 30 is stopped or the temperature of the heater 33 raises to an excessive level due to a malfunction of the temperature sensor 34. Figure 5 is a circuit diagram illustrating the connection of the heater 33, the automatic temperature switch 41, the fuse 42, and a power source 43.

The automatic temperature switch 41 is used when the temperature sensor 34 malfunctions and serves to cut off power to the heater 33 when the temperature of the main body 31 is increased by a first predetermined temperature range (for example, 170~180°C) above a range controlled by the temperature sensor 34 and applies power to the heater 33 when the temperature of the main body 31 decreases again. The automatic temperature switch 41 employs a conventional thermostat.

The fuse 42 is used when the automatic temperature switch 41 malfunctions, and is cut when the temperature of the main body 31 is increased by a second predetermined temperature (for example, 220°C) above the first predetermined temperature range, thereby completely cutting off the supply of power to the heater 33. The fuse 42 completely cuts off the supply of power to the heater 33 when the temperature of the main body 31 is excessively increased, thus preventing peripheral parts of the washing machine from being damaged by heat and protecting the washing machine from danger of a fire.

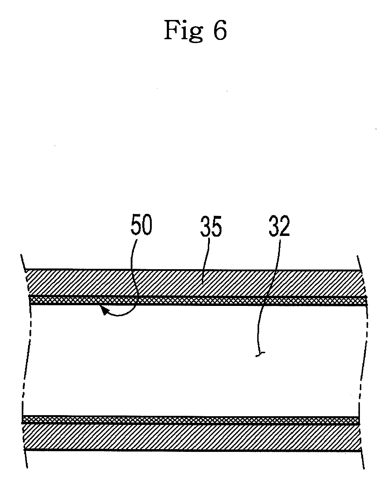

As shown in Figure 6, a non-cohesive coating layer 50 is formed on the inner surface of the steam supply channel 32 to prevent generation of mineral deposits (scales) on the inner surface of the steam supply channel 32 due to calcium or magnesium contained in water passing through the steam supply channel 32. The non-cohesive coating layer 50 is formed by coating the inner surface of the steam supply channel 32 with fluorine ceramic, which has excellent non-cohesiveness and heat-resistance, or Teflon. The non-cohesive coating layer 50 smoothes the inner surface of the steam supply channel 32 and increases the non-cohesiveness of the inner surface of the steam supply channel 32, thereby preventing deposition of foreign substances on the inner surface of the steam supply channel 32 and thus preventing mineral deposits.

Hereinafter, the overall operation of the washing machine comprising the above steam generating device will be described.

Firstly, laundry is inserted into the rotary drum 20 and the detergent is introduced into the detergent supply device 18. The washing operation of the washing machine is then performed such that the washing machine control unit opens the first water supply control valve 22 so that water is supplied to the detergent supply device 18. The detergent in the detergent supply device 18 dissolves in water and is supplied to the tub 11. After a predetermined quantity of washing water is supplied to the inside of the tub 11, the first water supply control valve 22 is closed so that the supply of the water to the first water supply pipe 21 is stopped.

When a user selects a washing operation using high temperature steam, power is applied to the heater 33 of the steam supply channel 32 by the control unit so that the main body 31 of the steam generating device 30 is heated. Water is not supplied to the steam generating device 30 for a designated time (for example, 30 seconds) to allow the main body 31 to be pre-heated.

When it is determined, by use of the temperature sensor 34, that the main body 31 of the steam generating device 30 is sufficiently pre-heated, the control unit opens the second water supply control valve 25 so that water is supplied to the steam generating device 30 to generate steam. Since the main body 31 is pre-heated, high temperature steam is generated just after water is supplied to the steam generating device 30, and is supplied to the tub 11 through the steam supply pipe 26. Therefore, the water in the tub 11 is rapidly heated by the high temperature steam. The heating of the water using the steam is continuously performed until the temperature of the water in the tub 11 reaches a predetermined washing temperature.

After the water in the tub 11 is heated to a predetermined washing temperature, the supply of steam is stopped by closing the second water supply control valve 25 and stopping the operation of the heater 33 and the rotary drum 12 is rotated at a low temperature by the motion of the motor 15, thereby performing the washing operation of the washing machine. After the washing operation is completed, a rinsing operation, in which the dehydration and the water supply are repeated, is performed.

The discharge of water from the tub 11 is performed by opening the drainage valve 19b and operating the drainage pump 19c. A final dehydrating operation after the rinsing operation is performed by operating the drainage pump 19c under the drainage valve 19b is opened and rotating the rotary drum 12 at a high speed for a designated time.

Although embodiments of the invention have been shown and described, it will be appreciated by those skilled in the art that changes may be made in these embodiments without departing from the principles of the invention, the scope of which is defined in the claims and their equivalents and the foregoing description should be regarded as a description of a preferred embodiment only.

## Claims

1. A device for generating steam to assist in cleaning laundry in a washing machine, the device comprising a main body (31) and a heater for heating the main body (31) **characterised by** a flow channel (32) in the main body (31) to convert water in the flow channel (32) into steam as it flows therethrough.

2. A device to generate steam in a washing machine according to claim 1, wherein the main body (31) comprises an inlet (24) through which water may be supplied to the flow channel and an outlet (26) through which steam is discharged from the flow channel (32), the outlet (26) having a smaller inner diameter than the inlet (24).

3. A device to generate steam in a washing machine according to claims 1 or 2 wherein the outlet (26) is permanently open.

4. A device to generate steam in a washing machine according to any preceding claim comprising a control valve (25) to control the flow of water through the flow channel (32) via the inlet (24).

5. A device to generate steam in a washing machine according to any preceding claim wherein the means of heating the main body is at least one electric heater (33) disposed in the main body (31).

6. A device to generate steam in a washing machine according to any preceding claim wherein the flow channel (32) comprises a pipe (35) disposed longitudinally in the main body.

7. A device to generate steam in a washing machine according to claim further comprising a helical coil member (37) located along the longitudinal axis on the inner diameter of the flow channel (32) to restrict flow through the channel.

8. A device to generate steam in a washing machine according to any preceding claim further comprising a control unit and a temperature sensor (34) located to detect the temperature of the main body (31), wherein the control unit controls the operation of the heater (33) and the water inlet control valve (25) dependent on signals from the temperature sensor (34).

9. A device to generate steam in a washing machine according to claim 8 further comprising an automatic temperature switch (41) wherein the automatic temperature switch (41) controls power applied to the heater (33) dependent on the temperature exceeding a predetermined level to prevent overheating.

10. A device to generate steam in a washing machine according to claim 9 further comprising a fuse (42), wherein the fuse (42) cuts off the supply of power to the heater (33) when the temperature of the main body (31) exceeds a second predetermined level which is higher than the first predetermined level.

11. A device to generate steam in a washing machine according to any preceding claim further comprising a non-cohesive coating layer on the inner surface of the flow channel to prevent mineral deposits.

12. A washing machine incorporating a device for generating steam according to any preceding claim.

13. A steam generating device comprising a main body provided with a steam supply channel formed therein, a heater buried in the main body for heating the main body to heat water flowing along the steam supply channel and a water supply control valve installed at an inlet of the steam supply channel.

14. The steam generating device as set forth in claim 13 wherein the main body is a metal mold manufactured such that a pipe for forming the steam supply channel and the heater are buried in the main body.

15. The steam generating device as set forth in claim 13 wherein the steam supply channel is formed in a longitudinal direction of the main body, and the heater buried in the main body is separated from the steam supply channel and extended in the longitudinal direction of the main body.

16. The steam generating device as set forth in claim 13 wherein the diameter of an outlet of the steam supply channel is smaller than the diameter of an inlet of the steam supply channel.

17. The steam generating device as set forth in claim 13 wherein a spiral coil member for delaying the flow of water is installed in the steam supply channel.

18. The steam generating device as set forth in claim 13 further comprising an overheating prevention device for controlling power applied to the heater when the heater is overheated.

19. The steam generating device as set forth in claim 18 wherein the overheating prevention device includes a temperature sensor for sensing the temperature of the main body and an automatic temperature switch for cutting off the power applied to the heater when the temperature of the main body is raised more than a first predetermined temperature.

20. The steam generating device as set forth in claim 19 wherein the overheating prevention device further includes a fuse for cutting off the power applied to the heater when the temperature of the main body is raised more than a second predetermined temperature higher than the first predetermined temperature.

21. The steam generating device as set forth in claim 13 wherein the main body is a metal mold manufactured such that a core for forming the steam supply channel and the heater are buried in the main body.

22. The steam generating device as set forth in claim 13 wherein an outlet of the steam supply channel is opened at all times.

23. The steam generating device as set forth in claim 13 further comprising a non-cohesive coating layer formed on the inner surface of the steam supply channel for preventing the generation of scales in the steam supply channel.

24. A washing machine having a steam generating device for supplying steam to the inside of a tub, said steam generating device comprising a main body provided with a steam supply channel formed therein, a heater buried in the main body for heating the main body to heat water flowing along the steam supply channel and a water supply control valve installed at an inlet of the steam supply channel.

25. The washing machine as set forth in claim 24 wherein the main body is a metal mold manufactured such that a pipe for forming the steam supply channel and the heater are buried in the main body.

26. The washing machine as set forth in claim 24 wherein the steam supply channel is formed in a longitudinal direction of the main body, and the heater buried in the main body is separated from the steam supply channel and extended in the longitudinal direction of the main body.

27. The washing machine as set forth in claim 24 wherein the inner diameter of an outlet of the steam supply channel is smaller than the inner diameter of an inlet of the steam supply channel.

28. The washing machine as set forth in claim 24 wherein a spiral coil member for delaying the flow of water is installed in the steam supply channel.

29. The washing machine as set forth in claim 24 further comprising an overheating prevention device for controlling power applied to the heater when the heater is overheated.

30. The washing machine as set forth in claim 24 wherein the overheating prevention device includes a temperature sensor for sensing the temperature of the main body and
an automatic temperature switch for cutting off the power applied to the heater when the temperature of the main body is raised more than a first predetermined temperature.

31. The washing machine as set forth in claim 24 wherein the overheating prevention device further includes a fuse for cutting off the power applied to the heater when the temperature of the main body is raised more than a second predetermined temperature higher than the first predetermined temperature.

32. The washing machine as set forth in claim 13 further comprising a non-cohesive coating layer formed on the inner surface of the steam supply channel for preventing the generation of scales in the steam supply channel.
